(19) Europäisches Patentamt / European Patent Office / Office européen des brevets

(11) **EP 3 905 648 A1**

(12) **EUROPEAN PATENT APPLICATION**
published in accordance with Art. 153(4) EPC

(43) Date of publication:
**03.11.2021 Bulletin 2021/44**

(51) Int Cl.:
*H04M 1/02* (2006.01)

(21) Application number: **20744439.9**

(22) Date of filing: **09.01.2020**

(86) International application number:
**PCT/CN2020/071094**

(87) International publication number:
**WO 2020/151498 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2019 CN 201920095844 U**

(71) Applicant: **GUANGDONG OPPO MOBILE TELECOMMUNICATIONS CORP., LTD.**
**Dongguan, Guangdong 523860 (CN)**

(72) Inventor: **ZENG, Chuanhua**
**Dongguan, Guangdong 523860 (CN)**

(74) Representative: **Thorniley, Peter et al**
**Venner Shipley LLP**
**200 Aldersgate**
**London EC1A 4HD (GB)**

(54) **FOLDABLE HOUSING ASSEMBLY, AND FOLDABLE ELECTRONIC APPARATUS**

(57) The present application relates to a foldable housing assembly comprising a first housing and a second housing. The first housing and the second housing are capable of rotating relative to each other to achieve a folded state. The second housing comprises a main body and an accommodation portion. The main body is rotatably connected to the first housing, the accommodation portion is connected to the main body, and the accommodation portion protrudes from a surface of the main body. When the first housing and the second housing are in the folded state, the first housing is stacked on the main body and arranged side by side with the accommodation portion. The foldable housing assembly further comprises an angle detection module comprising a magnet and a Hall device. The magnet is disposed at the first housing. The Hall device is disposed at the accommodation portion, and used to sense a strength of a magnetic.

FIG. 2

EP 3 905 648 A1

## Description

CROSS REFERENCE TO RELATED APPLICATIONS

This application claims priority of Chinese patent application No. 201920095844.7 filed January 21, 2019, entitled "FOLDABLE HOUSING ASSEMBLY AND FOLDABLE ELECTRONIC APPARATUS", the contents of which are incorporated herein by reference in their entirety.

Field

The present disclosure relates to the field of consumer electronic apparatus, and more particular, to a foldable housing assembly and a foldable electronic apparatus.

Background

In current foldable electronic apparatuses, such as foldable mobile phones, a display screen of a mobile phone is folded in half to realize the miniaturization of the mobile phone to facilitate a user to carry. A conventional foldable mobile phone usually comprises a first housing and a second housing that are pivotally connected to each other, and a flexible display screen covering the first housing and the second housing. In order to detect a relative rotation angle between the first housing and the second housing, the foldable mobile phone usually also comprises an angle detection unit. The angle detection unit comprises a magnet arranged in the first housing and a Hall sensor arranged in the second housing. When the first housing and the second housing are overlapped, the magnet and the Hall sensor are opposite along a thickness direction of the foldable mobile phone. The Hall sensor can detect the relative rotation angle between the first housing and the second housing according to a strength of a magnetic field of the magnet.

At present, people usually use metal (such as stainless steel) housings as the first housing and the second housing of the foldable mobile phones based on considerations of structural strength and volume. However, metal (such as stainless steel) housings will shield or interfere with the magnetic field of the magnet, thereby making it difficult for the Hall sensor to accurately detect the relative rotation angle between the first housing and the second housing.

Summary

Embodiments of the present disclosure provide a foldable housing assembly and a foldable electronic apparatus for solving above technical problems.

Embodiments of the present disclosure provide a foldable housing assembly comprising a first housing and a second housing rotatably connected to the first housing. The first housing and the second housing are relatively rotatable relative to each other to reach a folded state. The second housing comprises a main body configured to rotatably connect to the first housing, and an accommodating portion configured to connect to the main body. The accommodating portion protrudes relative to a surface of the main body. The first housing is stacked on the main body and arranged side by side with the accommodating portion when the first housing and the second housing are overlapped. The foldable housing assembly further comprises an angle detection unit comprising a magnet arranged in the first housing and a Hall device arranged in the accommodating portion. The Hall device is used to sense a magnetic field strength of the magnet to obtain an angle between the first housing and the second housing.

Embodiments of the present disclosure further provide a foldable electronic apparatus comprising the above foldable housing assembly and a foldable screen connected to the first housing and the second housing. The foldable screen is able to be folded along with relative rotation of the first housing and the second housing.

In the foldable housing assembly and the foldable electronic apparatus provided by the embodiments of the present disclosure, the Hall device is arranged in a protruding accommodating portion and the magnet is arranged in the first housing, so that the Hall device and the magnet are prevented from being arranged on opposite sides of the cover plate of the housing, and the Hall device and the magnet are substantially offset to prevent shielding or interfering by the cover plate when the Hall device is sensing the magnetic field of the magnet, which can improve the detection accuracy of the angle detection unit.

Brief description of the drawings

In order to more clearly illustrate the embodiments of the present application or the technical solutions in the related art, the drawings to be used in the description of the embodiments or the related art will be briefly introduced below. Obviously, the drawings described below only illustrate some embodiments of the present application, and other drawings can be obtained according to these drawings without any creative effort for those skilled in the art.

FIG. 1 is a schematic perspective view of a foldable electronic apparatus provided in an embodiment of the present disclosure.

FIG. 2 is a perspective cross-sectional view of the foldable electronic apparatus shown in FIG.1.

FIG. 3 is an enlarged schematic view of an area III of the foldable electronic apparatus shown in FIG. 2.

FIG. 4 is a schematic projection view of the foldable electronic apparatus shown in FIG. 1.

FIG. 5 is a schematic cross-sectional view of the foldable electronic apparatus shown in FIG. 4 along a line V-V.

FIG. 6 is an enlarged schematic view of an area VI of the foldable electronic apparatus shown in FIG. 5.

Detailed description of the illustrated embodiments

Embodiments of the present disclosure will now be described in conjunction with the accompanying drawings, and it will be apparent that the described embodiments are only a part of the present invention and are not intended to be exhaustive. All other embodiments obtained by one of ordinary skill in the art without creative work are intended to be within the scope of the present disclosure based on the embodiments provided herein.

The "electronic apparatus" used in the embodiments of the disclosure may include, but is not limited to, an apparatus configured to be coupled via a wired line and/or to receive/transmit communication signals via a wireless interface. Examples of the wired line may include, but are not limited to, a public switched telephone network (PSTN), a digital subscriber line (DSL), a digital cable, a cable used for direct connection, and/or another data connection line or network connection line. Examples of the wireless interface may include, but are not limited to, a wireless interface for a cellular network, a wireless local area network (WLAN), a digital television network such as a digital video broadcasting-handheld (DVB-H) network, a satellite network, an AM-FM broadcast transmitter, and/or another communication terminal. A terminal configured to communicate via a wireless interface may be referred to as a "wireless communication terminal", a "wireless terminal", and/or a "mobile terminal". Examples of a mobile terminal may include, but are not limited to, a satellite or cellular telephone, a personal communication system (PCS) terminal capable of combining cellular radio telephone and data processing, fax, and data communication, a personal digital assistant (PDA) equipped with radio telephone, pager, Internet/Intranet access, Web browser, notebook, calendar, and/or global positioning system (GPS) receiver, and a conventional laptop and/or a handheld receiver or another electronic device equipped with radio telephone.

Technical solutions in embodiments of the present disclosure will be clearly and completely described below in conjunction with the drawings in the embodiments of the present disclosure.

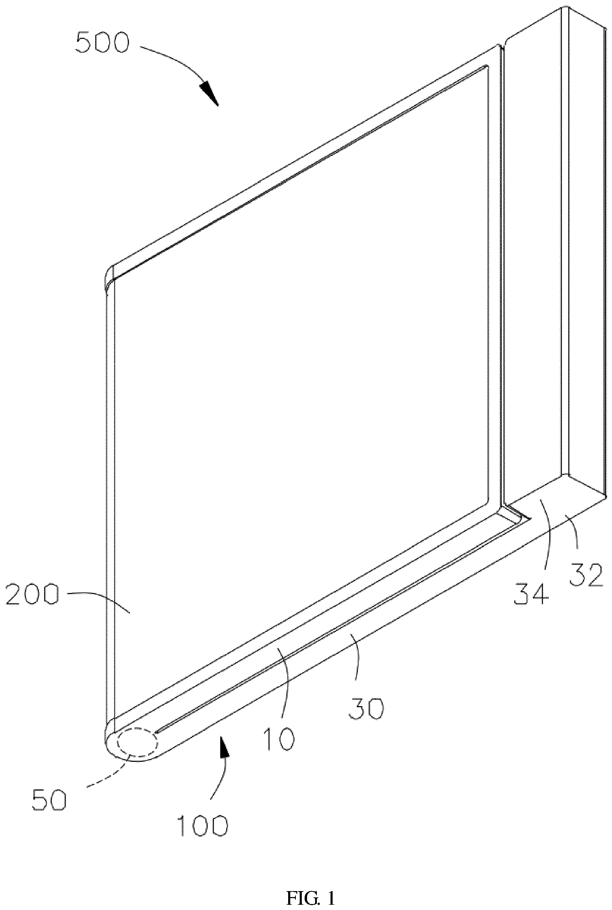

Referring to FIG. 1, an embodiment of the present application provides a foldable electronic apparatus 500. The foldable electronic apparatus 500 can be, but is not limited to, an electronic apparatus such as mobile phones, tablet computers, smart watches, and the like. The foldable electronic apparatus 500 of this embodiment is described by taking a mobile phone as an example.

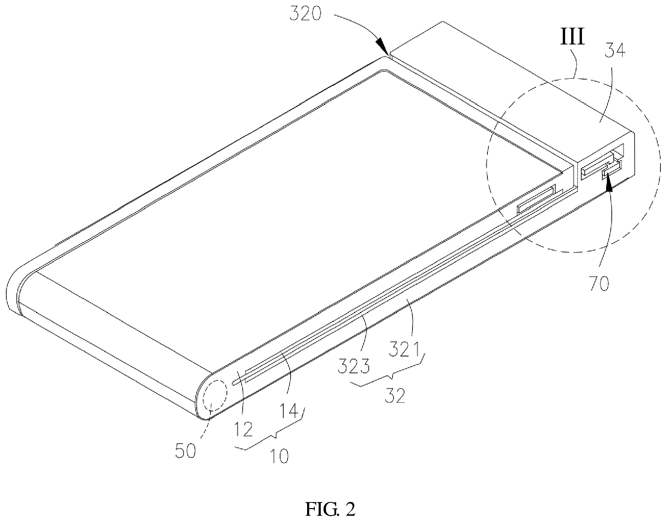

Referring to FIGs. 1 and 2 at the same time, the foldable electronic apparatus 500 comprises an electronic assembly (not shown in the figure), a foldable housing assembly 100, and a foldable screen 200. The electronic assembly is disposed in the foldable housing assembly 100. The foldable screen 200 is laid on the foldable housing assembly 100. The foldable housing assembly 100 is used to carry the foldable screen 200 while protecting the electronic assembly.

The foldable housing assembly 100 comprises a first housing 10, a second housing 30, and a rotating shaft mechanism 50, and the first housing 10 and the second housing 30 are respectively connected to the rotating shaft mechanism 50. The second housing 30 can be folded or unfolded relative to the first housing 10 via the rotating shaft mechanism 50 so that the foldable housing assembly 100 drives the foldable screen 200 to be folded or unfolded via the rotating shaft mechanism 50. A volume of the foldable electronic apparatus 500 is relatively small when the foldable housing assembly 100 and the foldable screen 200 are overlapped, which is convenient for storage and carrying. It should be understood that, in the specification of the present disclosure, the terms "first" and "second" are only used for descriptive purposes and cannot be understood as indicating or implying relative importance or implicitly indicating the number of the indicated technical features. Therefore, the features defined with "first" and "second" may explicitly or implicitly include at least one of the features.

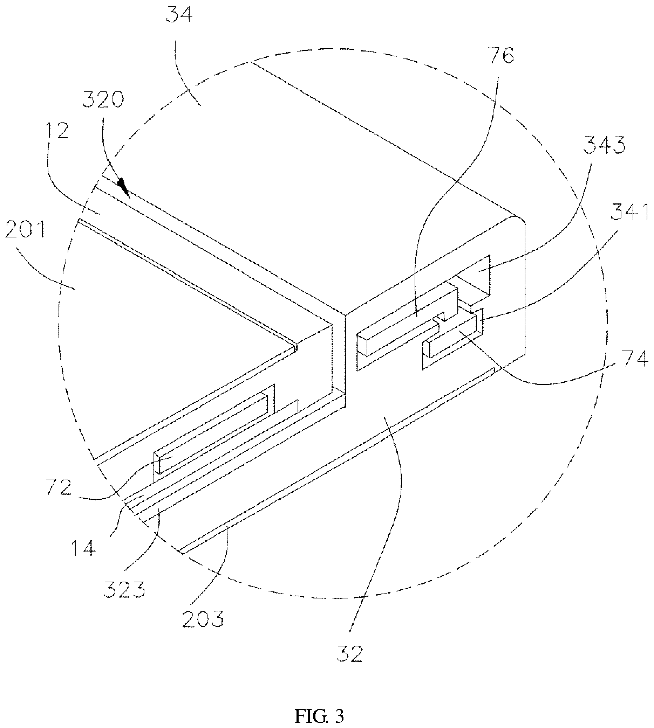

Referring to FIGs. 2 and 3 at the same time, the first housing 10 comprises a first middle frame 12 and a first cover 14. One side of the first middle frame 12 is connected to the rotating shaft mechanism 50, and the first middle frame 12 is used to carry portions of a structure of the electronic assembly. The first cover 14 covers the first middle frame 12. When the first housing 10 and the second housing 30 are overlapped, the first cover 14 and the second housing 30 are overlapped. That is, the first cover 14 is closely next to the second housing 30. In this embodiment, the first cover 14 is a metal cover. Further, the first cover 14 may be a stainless steel cover, so that the appearance of the foldable housing assembly 100 has a metallic texture, and it is beneficial to the processing of the appearance surface of the foldable housing assembly 100.

The second housing 30 comprises a main body 32 and an accommodating portion 34. One side of the main body 32 is connected to the rotating shaft mechanism 50, and the accommodating portion 34 is disposed on a side of the main body 32 away from the rotating shaft mechanism 50. In this embodiment, the accommodating portion 34 is located on one side of the main body 32 and protrudes relative to the surface of the main body 32. The accommodating portion 34 and the main body 32 together form an accommodating space 320, and the accommodating space 320 is used for accommodating the first housing 10. The accommodating portion 34 is used to accommodate portions of the structure of the electronic assembly. For example, the electronic assembly may comprise a functional unit disposed in the accommodating portion 34, and the functional unit may comprise any one or more of a camera unit, a fingerprint recognition unit, an iris recognition unit, a data connection unit, a receiver unit, a speaker unit, etc. When the first housing 10 and the second housing 30 are overlapped, the first housing 10 is stacked on the main body 32 and is accommodated within the accommodating space 320, and the first housing 10 and the accommodating portion 34 are arranged side by side. Further, when the first housing 10 and the second housing 30 are overlapped, the first housing 10 is stacked on the main body 32 and arranged side by side with the accommodating portion, and the surface of the first housing 10 away from the main body 32 is level with the surface of the accommodating portion 34 away from the main body 32. By arranging the above-mentioned functional unit in the relatively protruding accommodating portion 34, and overlapping the first housing 10 and the main body 32, a thickness of the functional unit can be prevented from restricting a thickness of other parts (such as the first housing 10 or the main body 12) to appropriately reduce the thickness of other parts (such as the first housing 10 or the main body 12) thereby facilitating thin design of the foldable mobile terminal 500. Specifically, in some embodiments, the accommodating portion 34 may be provided with a corresponding mounting structure, in order to accommodate the above-mentioned functional unit. For example, the functional unit may comprise an image sensor, a light sensor, etc., and the accommodating portion 34 may be provided with transmission channels for transmitting and receiving sensor signals. These transmission channels may be light holes or gaps, and the functional unit is disposed in the accommodating portion 34 corresponding to the transmission channel.

In the embodiment shown in FIG. 2, the accommodating portion 34 is provided on one side of the main body 32 away from the rotating shaft mechanism 50. It can be understood that, in other embodiments, the accommodating portion 34 may be provided at other locations of the main body 32. For example, the accommodating portion 34 may be provided on the side of the main body 32 adjacent to the rotating shaft mechanism 50.

Further, in this embodiment, the main body 32 comprises a second middle frame 321 and a second cover 323. One side of the second middle frame 321 is connected to the rotating shaft mechanism 50, and the second middle frame 321 is used to carry portions of the structure of the electronic assembly. In this case, the accommodating portion 34 is connected to the second middle frame 321, and the first middle frame 14, the second middle frame 321 and the accommodating portion 34 together form a middle frame structure of the foldable electronic apparatus 500, which is used for mounting an electronic assembly. The second cover 323 covers the second middle frame 321. When the first housing 10 and the second housing 30 are overlapped, the first cover 14 and the second cover 323 are overlapped. That is, the first cover 14 is closely next to the second cover 323. In this embodiment, the second cover 323 is a metal cover. Further, the second cover body 323 may be a stainless steel cover, so that the appearance of the foldable housing assembly 100 has a metallic texture, and the processing of the appearance surface of the foldable housing assembly 100 is facilitated. It is understandable that in some other embodiments, any one of the first cover 14 and the second cover 323 may be a stainless steel cover, and the other may be a cover plate of other materials.

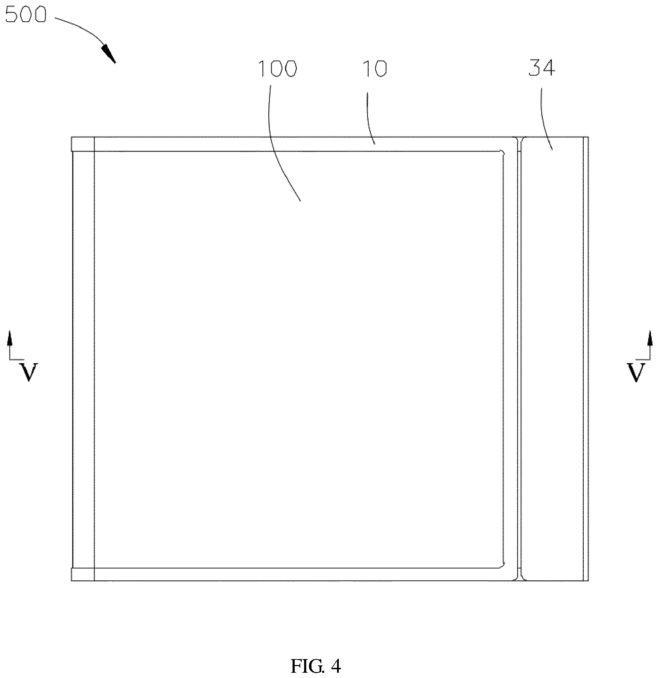

In this embodiment, the foldable housing assembly 200 further comprises an angle detection unit 70, and the angle detection unit 70 is used to detect an angle formed between the first housing 10 and the second housing 30. Referring to FIGs. 4 to 6, the angle detection unit 70 includes a magnet 72 and a Hall device 74. The magnet 72 is disposed in the first housing 10, and the Hall device 74 is disposed in the accommodating portion 34 of the second housing 30.

In this embodiment, the magnet 72 is a permanent magnet, which can generate a magnetic field for detection by the Hall device 74. It can be understood that, in other embodiments, the magnet 72 may also be an electromagnet, and the electromagnet can generate a magnetic field for detection by the Hall device 74 by controlling the current flowing through the electromagnet.

The Hall device 74 is a Hall sensor. The Hall sensor can directly detect the magnetic field and the change of the magnetic field. It can generate a corresponding Hall voltage according to the surrounding magnetic field strength. The Hall voltage changes with the change of the magnetic field strength. The stronger the magnetic field, the higher the voltage, and the weaker the magnetic field, the lower the voltage. It can be understood that the factor that affects the change of the magnetic field strength lies in the distance between the Hall device 74 and the magnet 72. That is, in actual use, the distance between the Hall device 74 and the magnet 72 can be determined according to the Hall voltage.

In actual use, the angle detection unit 70 of this embodiment can calculate an angle between the first housing 10 and the second housing 30 according to the distance between the Hall device 74 and the magnet 72 and through a preset algorithm. For example, taking the rotating shaft mechanism 50 as a starting point, the distance between the Hall device 74 and the rotating shaft mechanism 50 is set to a, the distance between the magnet 72 and the rotating shaft mechanism is set to b, the distance between the Hall device 74 and the magnet 72 is set to d, and the angle between the first housing 10 and the second housing 30 is set to $\alpha$. From the law of cosines:

$$d^2 = a^2 + b^2 - 2a*b*\cos(\alpha),$$

we can get the angle $\alpha = \cos^{-1}(a^2 + b^2 - d^2/2a*b^*)$.

It should be understood that the foregoing calculation method is only an example. In other embodiments, the foldable electronic apparatus 500 may also use other calculation steps to convert the distance between the Hall device 74 and the magnet 72 into the angle between the first housing 10 and the second housing 30.

In the embodiment of the present application, by disposing the Hall device 74 in the relatively protruding accommodating portion 34, and disposing the magnet 72 at an end of the first housing 10 adjacent to the accommodating portion 34, the Hall device 74 and the magnet 72 can be prevented from being arranged on opposite sides of the stainless steel cover; rather, the Hall device 74 and the magnet 72 are substantially offset to prevent shielding or interfering by the stainless cover when the Hall device 74 is sensing the magnetic field of the magnet 72, which can improve the detection accuracy of the angle detection unit 70.

Further, in this embodiment, when the first housing 10 and the second housing 30 are overlapped, a plane defined by the magnet 72 and the Hall device 74 is neither parallel with the first cover 14 nor the second cover 323. In short, when the first housing 10 and the second housing 30 are overlapped, the plane defined by the magnet 72 and the Hall device 74 is not parallel to the plane where the first housing is located. That is, when the first housing 10 and the second housing 30 are overlapped, the magnet 72 and the Hall device 74 are offset from each other in a direction parallel to the first cover 14 or the second cover 323, to avoid the direction of the magnetic induction line of the magnet 72 being parallel to the Hall device 74 and enable the magnetic induction line of the magnet 72 to pass through the Hall device 74, so that the Hall device 74 can sense the magnetic field strength. Preferably, S pole and N pole of the magnet 72 are arranged along the extension direction of the first cover 14. For example, the S pole and N pole of the magnet 72 are arranged along a direction substantially parallel to the first cover 14. The width space of the foldable housing assembly 100 can be used to accommodate the magnet 72, which is beneficial to the thin design of the foldable housing assembly 100. At this time, offsetting the magnet 72 and the Hall device 74 from each other also facilitates the Hall device 74 to detect magnetic field.

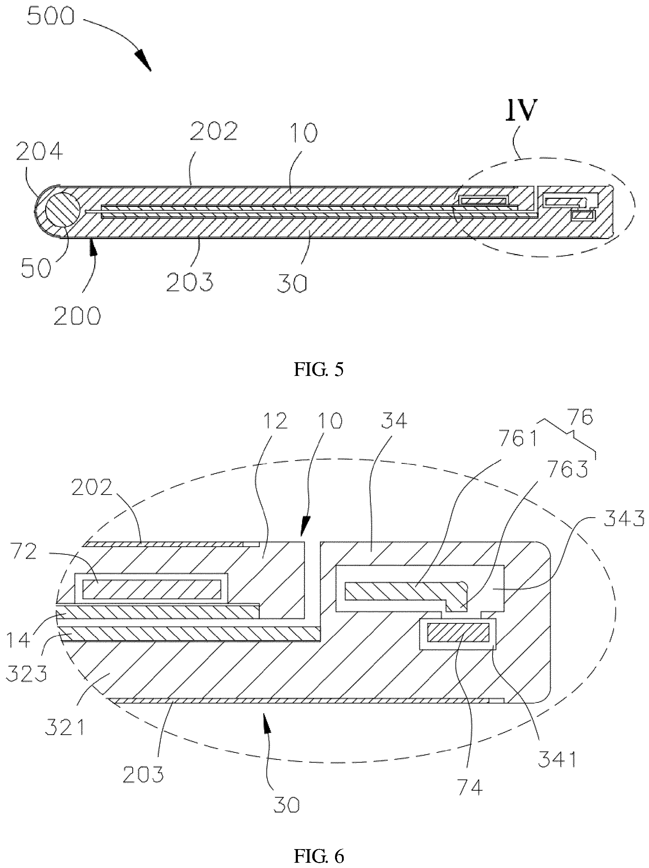

Further, in this embodiment, the angle detection unit 70 further comprises a magnetizer 76, and the magnetizer 76 is disposed in the accommodating portion 34 and adjacent to the Hall device 74. The magnetizer 76 is used to guide the magnetic induction line of the magnet 72 to pass through the Hall device 74, to improve the detection accuracy of the angle detection unit 70. In the thickness direction of the foldable housing assembly 100, the magnetizer 76 is at least partially overlapped with the Hall device 74 or located above or below the Hall device 76, or at least portions of the structure of the magnetizer 76 is directly opposed to the Hall device 74. Specifically, in the embodiment shown in FIG. 6, the magnetizer 76 is disposed on the side of the accommodating portion 34 away from the second middle frame 321 of the main body 32. When the first housing 10 and the second housing 30 are overlapped, the magnetizer 76 and the magnet 72 are disposed oppositely in a direction parallel to the first cover 14 or the second cover 323. That is, the plane defined by the magnetizer 76 and the magnet 72 is approximately parallel to the first cover 14 and the second cover 323. In this case, the magnetizer 76 is located in the magnetic field of the magnet 72 and is magnetized, and the magnetic induction lines of the magnet 72 are gathered by the magnetizer 76 and then pass through the magnetizer 76 to reach the sensing center of the Hall device 74. It should be understood that the "opposite" in the above-mentioned "the magnetizer 76 and the magnet 72 are arranged oppositely" should be understood as the opposite physical position of the two relative to each other, and other elements may be provided as a spacer between the two. For example, the magnetizer 76 and the magnet 72 may be respectively arranged in their respective accommodating cavities, but when the first housing 10 and the second housing 30 are overlapped, the physical positions of the magnetizer 76 and the magnet 72 are opposite.

The magnetizer 76 comprises an extension portion 761 and a guiding portion 763. The extension portion 761 is substantially in a flat plate shape. When the first housing 10 and the second housing 30 are overlapped, the extension portion 761 is substantially coplanar with the magnet 72 and extends toward the magnet 72. The guiding portion 763 is disposed at an end of the extension portion 761 away from the first housing 10, and is located on a side of the extension portion 761 facing the Hall device 74, and the guiding portion 763 protrudes toward the Hall device 74 with respect to the surface of the extension portion 761. Furthermore, the guiding portion 763 is arranged to protrude toward the sensing center of the Hall device 74, so as to guide more magnetic induction lines to the Hall device 74, thereby further improving the detection accuracy of the angle detection unit 70.

In this embodiment, the magnetizer 76 is a soft iron block, which is easily magnetized when placed in a magnetic field, and is immediately demagnetized when taken out from the magnetic field, so that the change of the magnetic field sensed by the Hall device 74 will not lag due to the presence of the magnetizer 76, thereby ensuring the response speed of the Hall device 74. In the embodiments of the present disclosure, the soft iron block should be generally understood as pure iron or iron with very little carbon content.

In the above-mentioned embodiment, the magnetizer 76 is arranged on the side of the Hall device 74 away from the second middle frame 321. It can be understood that in other embodiments, the magnetizer 76 may be arranged on the side of the Hall device 74 facing the second middle frame 321. In this case, when the first housing 10 and the second housing 30 are overlapped, the magnetizer 76 and the magnet 72 are disposed oppositely, which is not limited to the description in this embodiment.

Further, in order to effectively accommodate the magnetizer 76 and the Hall device 74, the accommodating portion 34 may be provided with a first accommodating cavity 341 and a second accommodating cavity 343 communicating with each other, and the Hall device 74 is disposed in the first accommodating cavity 341, the conductive magnet 76 is disposed in the second accommodating cavity 343. In this embodiment, the first accommodating cavity 341 is disposed between the second accommodating cavity 343 and the main body 32, so that the Hall device 75 and the magnetizer 76 can be substantially overlapped. It can be understood that, in other embodiments, the first accommodating cavity 341 may be provided on the side of the second accommodating cavity 343 away from the main body 32, or the first accommodating cavity 341 and the second accommodating cavity 343 may be provided in the accommodating portion 34 in other positional relationship (for example, both are arranged in parallel with respect to the main body 32, etc.), which is not limited to the description in the embodiment of the present application.

Referring to FIG. 2 again, the electronic assembly comprises a first electronic unit, a second electronic unit, and a flexible circuit board. The first electronic unit is disposed in the first housing 10, the second electronic unit is disposed in the second housing 30, and the flexible circuit board is electrically connected to the first electronic unit and the second electronic unit, respectively. Further, the first electronic unit may be a main board, and a central processing unit, a memory, an antenna, a camera and a receiver and the like provided at the main board. The second electronic unit may also be composed of a printed circuit board and a functional unit arranged at the printed circuit board. The second electronic unit is different from the first electronic unit, and the second electronic unit can be a battery, a connector, or a fingerprint unit.

The foldable screen 200 is laid on the first housing 10, the rotating shaft mechanism 50, and the second housing 30 in sequence. In this embodiment, the foldable screen 200 is a flexible display screen. The foldable screen 200 is folded or unfolded along with the first housing 10 and the second housing 30 being turned over. The foldable screen 200 is electrically connected to the electronic assembly, so that the electronic assembly can control operation of the foldable screen 200.

It is understandable that the foldable electronic apparatus 500 may be a multi-purpose mobile phone that realizes a small screen display, or a large screen display, or a curved screen display, and presents a variety of use functions. For example, in the foldable electronic apparatus 500 where the foldable screen 200 is in a stacked configuration, the first housing 10 and the second housing 30 can be overlapped together, and the foldable electronic apparatus 500 can be used as a mobile phone, which is convenient for users to carry and which occupies a small space. In the foldable electronic apparatus 500 where the foldable screen 200 is folded at a certain angle, the first housing 10 is unfolded relative to the second housing 30 and a certain angle is formed between the two. The foldable electronic apparatus 500 can be used as a notebook computer. In the foldable electronic apparatus 500 where the foldable screen 200 is in the unfolded state, the first housing 10 is unfolded relative to the second housing 30 and is flush with it. The foldable electronic apparatus 500 can be used as a tablet computer to increase the display area to get more display content and improve user experience. Of course, the foldable electronic apparatus 500 may also be a multi-purpose tablet computer, or a multi-purpose notebook computer, or other multi-function electronic devices with multiple modes for switching.

Referring to FIGS. 5 and 6 at the same time, in this embodiment, the foldable screen 200 comprises a first display portion 202 connected to the first housing 10, a second display portion 203 connected to the second housing 30, and a folding display portion 204 connected to the first display portion 202 and the second display portion 203. The first display portion 202 and the second display portion 203 are relatively folded or unfolded along with the first housing 10 and the second housing 30, respectively. The folding display portion 204 is folded or unfolded as the first display portion 202 is folded or unfolded relative to the second display portion 203. When the first housing 10 and the second housing 30 are overlapped, the first housing 10 is accommodated in the accommodating space 320, and the surface of the first display portion 202 is level with the surface of the accommodating portion 34 away from the main body 32.

In some embodiments, the first display portion 202, the second display portion 203, and the folding display portion 204 may comprise an integrated structure, so that the flexible display screen is a one-piece flexible display screen; or, in some other embodiments, the folding display portion 204 is a flexible portion that can be folded, while the first display portion 202 and the second display portion 203 may be non-flexible portions, and the first display portion 202 and the second display portion 203 are folded or unfolded via the folding display portion 204. In this embodiment, when the first housing 10 and the second housing 30 are overlapped, the first display portion 202 and the second display portion 203 are away from each other, so that the foldable electronic device 500 presents an outwardly folding screen structure. Therefore, an user can also observe the display content of the foldable screen 200 when being folded, which improves the convenience of using the foldable electronic apparatus 500.

Further, the foldable screen 200 may further comprise a flexible transparent cover plate (not shown in the figure) covering the first display portion 202, the second display portion 203, and the folding display portion 204. The flexible transparent cover plate is attached to the first display portion 202, the second display portion 203, and the folding display portion 204. A periphery of the flexible transparent cover plate may be fixedly connected to the first housing 10 and the second housing 30. The flexible transparent cover plate is used to protect the first display portion 202, the second display portion 203, and the folding display portion 204 to improve the overall appearance integrity of the foldable electronic apparatus 500.

In the description of this specification, the description with reference to the terms "one embodiment", "some embodiments", etc. means that a specific feature, structure, material, or characteristic described in conjunction with the embodiment or example is included in at least one embodiment or example of the present application. In this specification, schematic representations of the above terms do not necessarily refer to the same embodiment or example. Moreover, the described specific features, structures, materials or characteristics can be combined in any one or more embodiments or examples in a suitable manner. In addition, those skilled in the art can combine different embodiments or examples and the features of the different embodiments or examples described in this specification without contradicting each other.

Finally, it should be noted that the above embodiments are only used to illustrate technical solutions of the present application, but not to limit them; although the present application has been described in detail with reference to the foregoing embodiments, those of ordinary skill in the art should understand that the technical solutions recorded in the foregoing embodiments may be modified, or some of the technical features may be equivalently replaced, if these modifications or replacements do not make the essence of the corresponding technical solutions deviate from the spirit and scope of the technical solutions of the embodiments of the present application.

**Claims**

1. A foldable housing assembly, **characterized in** comprising:

   a first housing;
   a second housing rotatably connected to the first housing, the first housing and the second housing being rotatable relative to each other to reach a folded state; and
   an angle detection unit,
   wherein the second housing comprises:

   a main body configured to rotatably connect to the first housing; and
   an accommodating portion configured to connect to the main body and protrude relative to a surface of the main body; wherein the first housing is stacked on the main body and arranged side by side with the accommodating portion, when the first housing and the second housing are overlapped;

   wherein the angle detection unit comprises:

   a magnet arranged in the first housing; and
   a Hall device arranged in the accommodating portion, **characterized in that** the Hall device is used to sense a magnetic field strength of the magnet to obtain an angle between the first housing and the second housing.

2. The foldable housing assembly according to claim 1, **characterized in that** the angle detection unit further comprises a magnetizer; the magnetizer is disposed in the accommodating portion and adjacent to the Hall device, and a position of the magnetizer is opposite to a position of the magnet when the first housing and the second housing are overlapped.

3. The foldable housing assembly according to claim 2, **characterized in that** the magnetizer comprises an extension portion and a guiding portion; the guiding portion is disposed at one end of the extension portion away from the first housing, and the guiding portion protrudes toward the Hall device relative to the extension portion.

4. The foldable housing assembly according to any one of claims 2-3, **characterized in that** the magnetizer is arranged on a side of the Hall device away from the main body, or the magnetizer is arranged on a side of the Hall device facing the main body.

5. The foldable housing assembly according to any one of claims 2-4, **characterized in that** the accommodating portion is provided with a first accommodating cavity and a second accommodating cavity communicating with each other; the first accommodating cavity is disposed between the second accommodating cavity and the main body, the Hall device is disposed in the first accommodating cavity, and the magnetizer is disposed in the second accommodating cavity.

6. The foldable housing assembly according to any one of claims 2-5, **characterized in that** the magnetizer is a soft iron block.

7. The foldable housing assembly according to any one of claims 1-6, **characterized in that** at least a part of a structure of the magnetizer is directly opposite to the Hall device in the thickness direction of the foldable housing assembly.

8. The foldable housing assembly according to any one of claims 1-7, **characterized in that** a plane defined by the magnetizer and the Hall device is not parallel to a plane where the second housing is located, when the first housing and the second housing are overlapped.

9. The foldable housing assembly according to any one of claims 1-7, **characterized in that** the magnetizer and the Hall device are offset from each other along a direction parallel to the second housing, when the first housing and the second housing are overlapped.

10. The foldable housing assembly according to any one of claims 1-9, **characterized in that** the first housing comprises a first middle frame and a first cover provided at the first middle frame, the magnetizer is arranged at the first middle frame, and the first cover and the main body are overlapped when the first housing and the second housing are overlapped.

11. The foldable housing assembly according to claim 10, **characterized in that** the main body comprises a second middle frame and a second cover provided at the second middle frame, the accommodating portion is connected to the second middle frame, and the first cover and the second cover are overlapped when the first housing and the second housing are overlapped.

12. The foldable housing assembly according to claim 11, **characterized in that** the first cover is a stainless steel cover, or/and the second cover is a stainless steel cover.

13. The foldable housing assembly according to any one of claims 1-12, **characterized in that** the foldable housing assembly further comprises a rotating shaft mechanism connected between the first housing and the main body, and the accommodating portion is connected to one side of the main body away from the rotating shaft mechanism.

14. The foldable housing assembly according to any one of claims 1-12, **characterized in that** the foldable housing assembly further comprises a rotating shaft mechanism connected between the first housing and the main body, and the accommodating portion is connected to one side of the main body adjacent to the rotating shaft mechanism.

15. The foldable housing assembly according to claims 12 or 14, **characterized in that** the accommodating portion and the main body jointly form an accommodating space for accommodating the first housing; the first housing is accommodated in the accommodating space, and a surface of the first housing away from the main body is level with a surface of the accommodating portion away from the main body, when the first housing and the second housing are overlapped.

16. A foldable electronic apparatus, **characterized in** comprising:

the foldable housing assembly according to any one of claims 1-14; and
a foldable screen connected to the first housing and the second housing, wherein the foldable screen is able to be folded along with relative rotation of the first housing and the second housing.

17. The foldable electronic apparatus according to claim 16, **characterized in that** the accommodating portion and the main body jointly form an accommodating space for accommodating the first housing, and the first housing is accommodated in the accommodating space when the first housing and the second housing are overlapped.

18. The foldable electronic apparatus according to claim 17, **characterized in that** the foldable screen comprises a first display portion, a second display portion and a bending display portion; the first display portion is connected to the first housing, the second display portion is connected to the second housing, and the bending display portion is connected between the first display portion and the second display portion.

19. The foldable electronic apparatus according to claim 18, **characterized in that** the first display portion and the second display portion are away from each other, and a surface of the first display portion is level with a surface of the accommodating portion away from the main body, when the first housing and the second housing are overlapped.

20. The foldable electronic apparatus according to any one of claims 16-19, **characterized in that** the accommodating portion is provided with a functional unit, and the functional unit comprises any one or more of a camera unit, a fingerprint recognition unit, an iris recognition unit, a data connection unit, a receiver unit, and a speaker unit.

FIG. 1

FIG. 2

FIG. 3

500

100    10    34

V    V

FIG. 4

FIG. 5

FIG. 6

## INTERNATIONAL SEARCH REPORT

| International application No. |
| --- |
| **PCT/CN2020/071094** |

**A.    CLASSIFICATION OF SUBJECT MATTER**

   H04M 1/02(2006.01)i

According to International Patent Classification (IPC) or to both national classification and IPC

**B.    FIELDS SEARCHED**

Minimum documentation searched (classification system followed by classification symbols)

   H04M

Documentation searched other than minimum documentation to the extent that such documents are included in the fields searched

Electronic data base consulted during the international search (name of data base and, where practicable, search terms used)

   CNABS, CNTXT, CNKI, VEN, WOTXT, USTXT, EPTXT: 磁体, 磁铁, 检测, 角度, 霍尔, 移动终端, 便携终端, 壳体, magnetic, detect, angle, holzer, mobile terminal, sleeve

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 209105239 U (OPPO GUANGDONG MOBILE COMMUNICATION CO., LTD.) 12 July 2019 (2019-07-12)<br>   claims 1-16 | 1-20 |
| A | CN 104539754 A (HUIZHOU TCL MOBILE COMMUNICATION CO., LTD.) 22 April 2015 (2015-04-22)<br>   entire document | 1-20 |
| A | CN 104127010 A (BEIJING XIAOMI TECHNOLOGY CO., LTD.) 05 November 2014 (2014-11-05)<br>   entire document | 1-20 |
| A | US 2010117629 A1 (MOTOROLA INC.) 13 May 2010 (2010-05-13)<br>   entire document | 1-20 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 March 2020** | **31 March 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/071094**

| Patent document cited in search report | | | Publication date (day/month/year) | Patent family member(s) | | | Publication date (day/month/year) |
|---|---|---|---|---|---|---|---|
| CN | 209105239 | U | 12 July 2019 | None | | | |
| CN | 104539754 | A | 22 April 2015 | None | | | |
| CN | 104127010 | A | 05 November 2014 | RU | 2618513 | C2 | 04 May 2017 |
| | | | | BR | 112014032978 | A2 | 27 June 2017 |
| | | | | JP | 6117442 | B2 | 19 April 2017 |
| | | | | CN | 104127010 | B | 22 June 2016 |
| | | | | KR | 20160011559 | A | 01 February 2016 |
| | | | | WO | 2015196662 | A1 | 30 December 2015 |
| | | | | EP | 2966413 | A1 | 13 January 2016 |
| | | | | KR | 101620259 | B1 | 11 May 2016 |
| | | | | MX | 2014015360 | A | 30 March 2016 |
| | | | | RU | 2014153009 | A | 20 July 2016 |
| | | | | JP | 2016524516 | A | 18 August 2016 |
| | | | | MX | 350064 | B | 25 August 2017 |
| US | 2010117629 | A1 | 13 May 2010 | WO | 2010053707 | A2 | 14 May 2010 |
| | | | | US | 9063182 | B2 | 23 June 2015 |
| | | | | WO | 2010053707 | A3 | 19 August 2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201920095844